# EUROPEAN PATENT SPECIFICATION

(11) **EP 0 716 237 B1**
(45) Date of publication and mention of the grant of the patent: **16.05.2001**
(21) Application number: 95203368.6
(22) Date of filing: 07.12.1995
(51) Int. Cl.: F16B 13/00

(54) **An anchor member for friable material and a method of implementing such a member**
Verankerungselement für sprödes Material und Anwendungsverfahren eines solchen Elementes
Organe d'ancrage pour matériau friable et procédé de mise en oeuvre d'un tel organe

(30) Priority: 08.12.1994 FR 9414767
(43) Date of publication of application: 12.06.1996
(60) Divisional application: 00122271.0
(73) Proprietor: Black & Decker Inc., Newark Delaware 19711 (US)
(72) Inventor: Anquetin, Robert, F-91580 Etrechy (FR)
(74) Representative: Dlugosz, Anthony Charles

(56) References cited:
- EP-A- 0 501 201
- WO-A-94/07039
- DE-C- 4 039 831
- FR-A- 2 530 306
- US-A- 3 911 781

## Description

The present invention relates in general to anchor members, commonly called "plugs", and more particularly to an anchor member designed to be inserted in friable material.

Document US-3 911 781 discloses an anchor member for friable material which, in conventional manner, comprises a circularly cylindrical body carrying a self-cutting outside thread and provided with an axial bore open at one end to receive a fastener inserted into said member.

The installation of a fastener in a friable material by means of such an anchor member generally takes place in three independent operations.

Firstly a hole is drilled in the friable material by means of a hole-making tool such as drill. Thereafter the anchor member is inserted in the previously prepared hole so that its self-cutting outside thread engages in the friable material. Finally, the threaded fastener is screwed into the anchor member that has been inserted in the friable material.

Another anchor member provided with a self-cutting outside thread is also known in the prior art, that anchor member being suitable for threading on a plane hole-making blade for the purpose of being installed in a friable material.

In order to insert such an anchor member in a friable material, said material is drilled with the plane hole-making blade being driven in rotation and carrying said member. The tip of the hole-making blade forms a hole in the friable material in which said anchor member anchors itself.

However, the hole made by that hole-making blade is not even. In addition, when the density or hardness of the friable material is slightly greater than average, the plane hole-making blade has difficulties piercing it.

Furthermore document FR-A-2 530 306 and document EP-A-501 201 both disclose anchor members according to the preamble of claim 1.

The present invention proposes an improved, novel type of anchor member that is of simple design, and that fits on a drill bit enabling well-calibrated holes to be made in any type of friable material.

More particularly, the anchor member of the invention comprises a hollow body which is substantially in the form of an elongate body of revolution that is open at both ends and provided with a self-cutting outside thread suitable for anchoring it in a friable material. Said hollow body is provided with means for securing it to a drill bit which includes longitudinal grooves whose sides constitute cutting edges distributed around the circumference of the hole to be made, said drill bit passing through said hollow body so that its hole-making tip projects forwards from said hollow body, characterised in that the hollow body includes an additional thread interposed within the self cutting outside thread and suitable for preventing rotation of the anchor member when inserted in the friable material.

Furthermore, the anchor member must be secured to the drill bit in such a manner as to ensure said anchor member is properly rotated, and the drill bit must be compatible with standard hole-making tools.

The present invention proposes two embodiments of anchor members in order to resolve those technical problems.

In a first embodiment, said means for securing the anchor member of the invention with the drill bit comprise helical grooves formed in the inside wall of said hollow body and suitable for co-operating with the helical grooves of a twist drill bit.

In a second embodiment, said means for securing the anchor member of the invention with the drill bit comprise rectilinear grooves formed in the inside wall of said hollow body and define a cruciform profile suitable for co-operating with a drilling and screw-driving endpiece having a complementary cruciform profile.

The following description made with reference to the accompanying drawings given as non-limiting examples, makes it clear what the invention consists in and how it can be performed.

In the accompanying drawings:
Figure 1a is a diagrammatic perspective view of a first embodiment of an anchor member of the invention;
Figure 1b is a partially cutaway perspective view of the Figure la anchor member;
Figure 2 is a view of the Figure la anchor member seen along arrow A;
Figure 3 is a diagrammatic perspective of the hole-making tool used with the Figure la anchor-member;
Figure 4 is a diagrammatic perspective view of a second embodiment of the anchor member of the invention;
Figure 5 is a view of the Figure 4 anchor member seen along arrow B;
Figure 6a is a diagrammatic side view of the hole-making tool used with the Figure 4 anchor member;
Figure 6b is a view of the Figure 6a hole-making tool seen along arrow C;
Figure 6c is a section view of the Figure 6a hole-making tool on a plane A-A;
Figures 7a to 7e show different steps in implementing the Figure la anchor member to fix a fastener in a friable material; and
Figures 8a to 8f show different steps in implementing the Figure 4 anchor member to fix a fastener in a friable material.

As a preliminary point, it should be observed that from one figure to another, elements or portions that are identical or similar have been designated wherever possible by the same reference symbols, and they are not described each time.

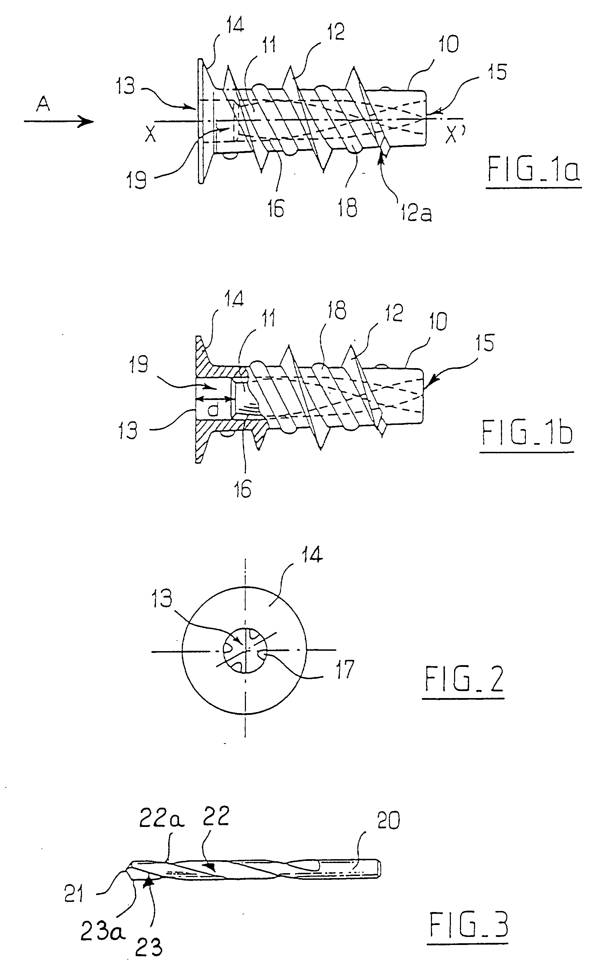

Figures 1a and 1b show an anchor member designed to be inserted in a friable material.

The anchor member comprises a hollow body 10 that is elongate along an axis X-X'. The body 10 has a conical outside surface and an axial passage 11 that is substantially circularly cylindrical. The body 10 is open at both ends 13 and 15. At a first end 13, it includes in conventional manner a collar 14 which is conical in shape and extends radially from said hollow body, having a plane thrust face around the opening of said hollow body. The conical outside surface of the hollow body 10 carries a self-cutting thread 12 which extends along the major part of the length of said body. This self-cutting thread 12 comprises a pyramid-shaped thread with a sharp edge suitable for anchoring the body 10 within a friable material. In addition; the self-cutting thread 12 has gaps 12a close to the other end 15 of the hollow body 10, which gaps have surfaces that are substantially radially flat for the purpose of performing a cutting operation. On its conical outside surface, the body 10 carries a second thread 18 interposed within the self-cutting thread 12. The second thread 18 comprises a thread of rounded shape suitable for preventing rotation of the body of the anchor member when inserted in the friable material.

The axial passage 11 in the body 10 has helical grooves 16 formed in the inside wall of said body 10. As can be seen in Figure lb, the helical grooves 16 start from a certain distance d from the end 13 provided with the collar 14 and extend all the way to the other end 15 of said body such that the axial passage 11 includes a cylindrical portion of length d adjacent to the end 13 and forming an inlet 19. The inlet 19 makes it possible to centre a fastener inside said anchor member when inserted in the friable material. The helical grooves 16 are designed to co-operate with the helical grooves 22, 23 of a twist drill bit 20, whose sides 22a, 23a constitute self-cutting edges distributed around the circumference of the hole to be made, said twist drill bit 20 passing through said hollow body 10 so that its hole-making tip 21 projects forwards from said body of the anchor member. The helical grooves 16 of the anchor member serve to ensure that the anchor member rotates together with the twist drill bit 20.

Figure 2 shows that at its end 13 provided with the collar 14, the body 10 of the anchor member includes a set of teeth constituted in this case by four teeth 17 regularly distributed around the opening of said body. Each of the teeth 17 extends radially from the inside wall of the hollow body towards the centre of the opening. The teeth are suitable for fixing the fastener inserted into the body of the anchor member.

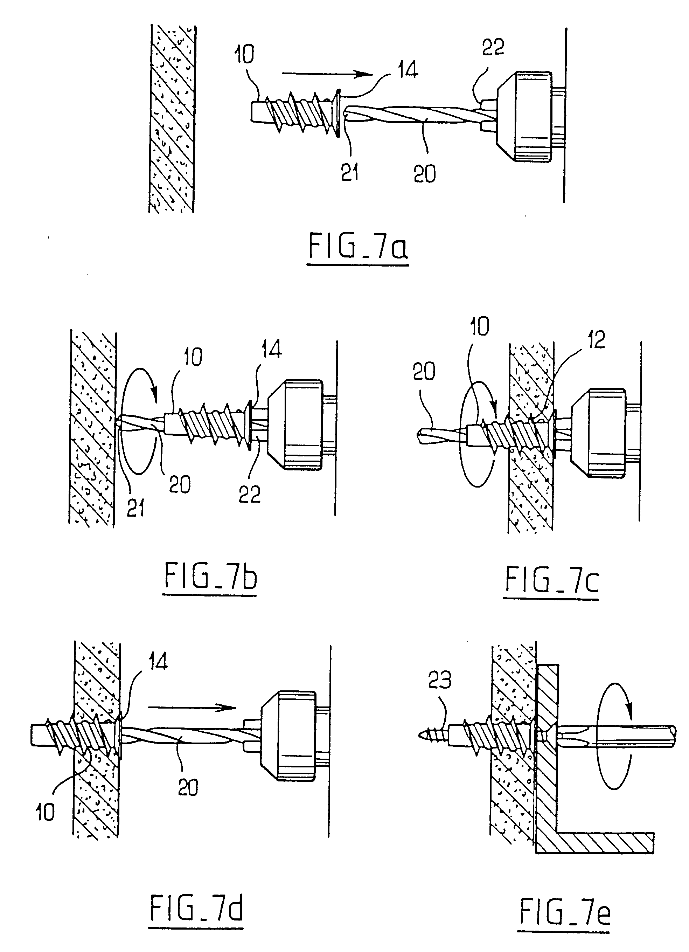

Implementation of the anchor member shown in Figures la and lb is described below with reference to Figures 7a to 7e.

In a first step, the twist drill bit 20 mounted on a drill is threaded inside the body 10 of the anchor member in such a manner that its hole-making tip 21 projects forwards from said body 10. Thus, by virtue of the helical grooves, the anchor member is constrained to rotate with said twist drill bit, with the plane face of the collar 14 bearing against the bit-support means 22 of the drill.

In a second step, the hole-making tip 21 of the twist drill bit 20 is placed against a panel of friable material and the drill is rotated so as to make a hole in the friable material. When the tip 21 of the twist drill bit 20 penetrates into the panel, the self-cutting thread 12 of the anchor member begins to cut complementary tapping in the friable material so as to anchor the body 10 of the anchor member in the calibrated hole made by the twist drill bit in the panel. The single operation of making the hole and installing the anchor member is terminated once the collar 14 of the body of the anchor member comes flush with the outside surface of the panel. It will be observed that the self-cutting thread serves to hold the anchor member axially in the panel while the rounded second thread serves to lock it in place.

In a subsequent step, the twist drill bit is extracted from the anchor member.

Finally, the fastener 23, carrying an object to be fixed, is screwed into said anchor member. In this case the fastener is a screw adapted to the anchor member and the tip of the screw 23 projects from the body of the anchor member. The screw is held in the anchor member by the set of teeth of said member.

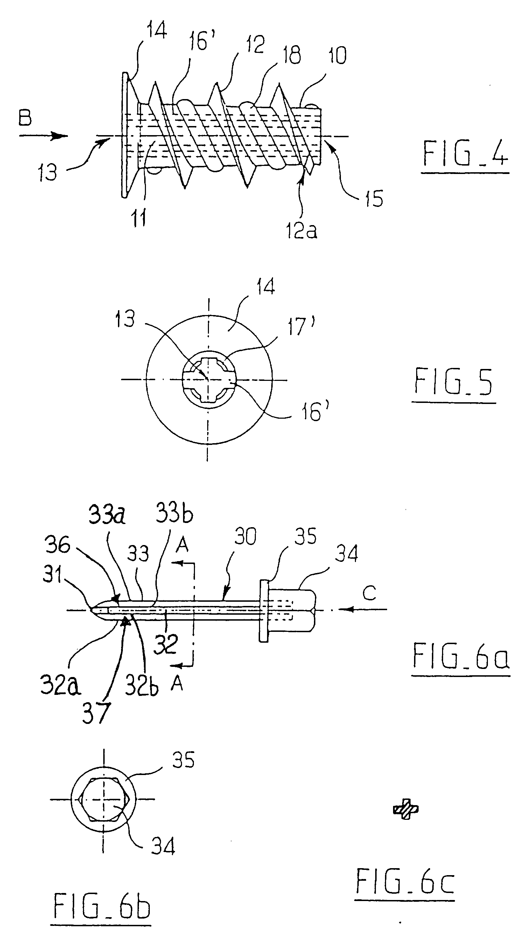

Figure 4 shows a variant embodiment of the anchor member of the invention.

In this variant, the axial passage 11 in said hollow body 10 is of cruciform section, being constituted by four rectilinear grooves 161 that are opposite one another in pairs, and that extend from one end of said hollow body to the opposite end thereof. Two of the four facing grooves are deeper than the other two.

The drill bit used with such an anchor member is shown more particularly in Figure 6a. This drill bit is a drilling and screw-driving endpiece 30 for a drilling and screw-driving tool, and it comprises a body made up of two crossed blades 32 and 33, comprising a cutting and drive blade 32 and a reinforcing and drive blade 33 whose walls in pairs define the longitudinal rectilinear grooves 36, 37 whose sides 32a, 32b, 33a, 33b constitute cutting edges distributed around the circumference of the hole to be made. The body of the endpiece 30 is of cruciform section. The body of said endpiece 30 is secured to a hexagonal drive head 34 suitable for mounting in a drilling and screw-driving tool. This drive head 34 includes a thrust collar 35. The cruciform section of the axial passage 11 through the anchor member is complementary to the cruciform section of the drill bit 30 such that when the anchor member is mounted on the drill bit, it is constrained to rotate together with said drill bit.

Furthermore, as shown more particularly in Figure 5, the end 13 of the body of said anchor member which is provided with the collar 14 includes a set of teeth comprising four fastening teeth 17' constituted in this case by flats cut between the grooves. These teeth enable a fastener to be fixed inside the anchor member.

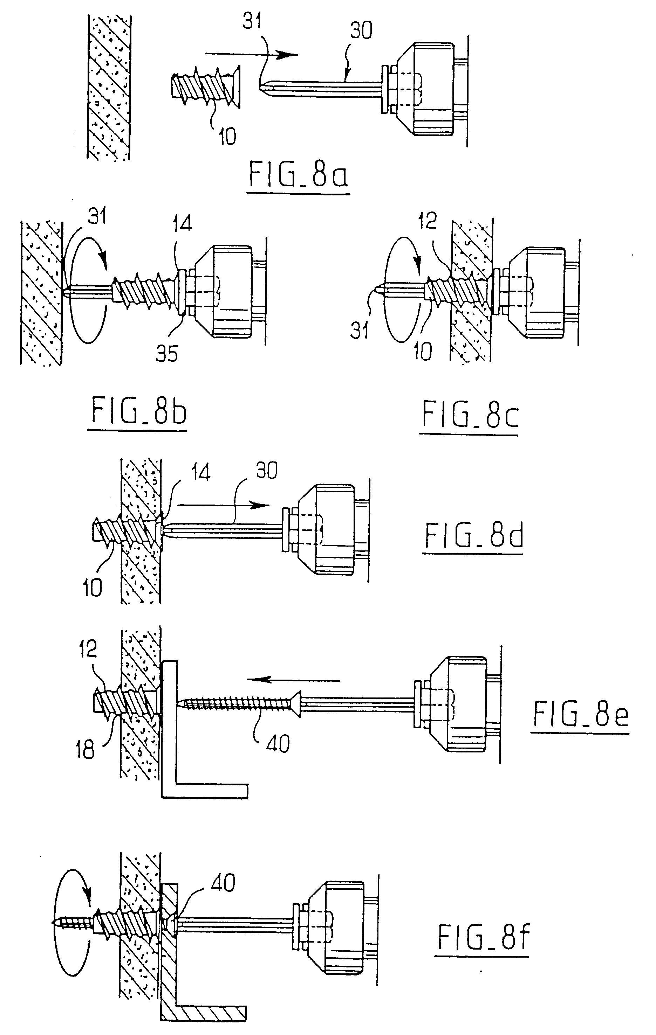

Implementation of the anchor member of Figure 4 is described below with reference to Figures 8a to 8f.

Initially, the endpiece 30 of the drilling and screwdriving tool is passed through inside the body 10 of the anchor member in such a manner that the tip 31 of said endpiece projects forwards from said body. In this position, the plane surface of the collar 14 of said anchor member bears against the collar 35 of the drilling and screw-driving endpiece 30. In a second step, the tip 31 of the drilling and screw-driving endpiece 30 is placed against a panel of friable material and it is rotated with appropriate torque for its tip 31 to penetrate into the friable material in order to make a calibrated hole. When the tip 31 of the endpiece has penetrated fully into the friable material, the self-cutting thread 12 of the anchor member penetrates into the friable material, thereby forming complementary tapping and securing the body 10 of the anchor member in the friable material. When the body 10 of the anchor member is fully inserted into the friable material and the collar 14 of said anchor member lies flush with the outside surface of the panel, the endpiece 30 is extracted from the anchor member. In this position, the self-cutting thread 12 serves to hold the anchor member axially in position while the rounded, second thread 18 prevents the anchor member from rotating in the friable material. In a final step, the drilling and screwdriving endpiece is used to screw a fastener 40 constituted in this case by a screw into the anchor member for the purpose of fixing an object on said panel.

## Claims

1. An anchor member comprising a hollow body (10) substantially in the shape of an elongate body of revolution that is open at both ends and provided with a self cutting outside thread (12) suitable for anchoring it to a friable material, said hollow body (10) being provided with means (16, 16') for securing it to a drill bit (20, 30) which includes longitudinal grooves (22, 23, 36, 37) whose sides constitute cutting edges (22a, 23a, 32a, 32b, 33a, 33b) distributed around the circumference of the hole to be made, said drill bit (20, 30) passing through such hollow body (10) so that its hole making tip (21, 31) projects forwards from said hollow body (10), characterised in that said hollow body (10) includes an additional thread (18) interposed within the self-cutting outside thread (12) and suitable for preventing rotation of the anchor member when inserted in the friable material.

2. An anchor member according to claim 1 characterised in that said means for securing the anchor member with the drill bit (20) comprise helical grooves (16) formed in the inside wall of said hollow body (10) and suitable for co-operating with the helical grooves (22, 23) of a twist drill bit (20).

3. An anchor member according to claim 1 characterised in that said means for securing the anchor member with a drill bit (30) comprise rectilinear grooves (16') formed in the inside wall of said hollow body (10) and defining a cruciform profile suitable for co-operating with a drilling and screwdriving endpiece (30) having a complementary cruciform profile.

4. An anchor member according to any one of the preceding claims, characterised in that said hollow body (10) includes a set of teeth (17, 17') at one end for fixing a fastener engaged in said hollow body (10) and projecting forwards from said hollow body (10).

5. An anchor member according to any one of the preceding claims, characterised in that said elongate hollow body (10) includes an inlet portion (19) situated close to one end (13) and enabling a fastener to be centred inside said hollow body (10).

6. An anchor member according to any one of the preceding claims, characterised in that the self cutting thread (12) has gaps (12a) close to one end of the elongate hollow body (10), the gaps having surfaces that are substantially radially flat for the purpose of performing a cutting operation.

## Patentansprüche

1. Verankerungselement, mit einem hohlen Körper (10), der im wesentlichen die Form eines länglichen Rotationskörpers hat, der an beiden Enden offen ist und mit einem selbstschneidenden Außengewinde (12) versehen ist, das geeignet ist, um es in einem spröden Material zu verankern, wobei der hohle Körper (10) mit Einrichtungen (16, 16') versehen ist, um ihn an einem Bohrereinsatz (20, 30) zu befestigen, der längliche Einschnitte (22, 23, 36, 37) hat, deren Seiten Schneidkanten (22a, 23a, 32a, 32b, 33a, 33b) bilden, die um den Umfang von dem herzustellenden Loch verteilt sind, wobei der Bohrereinsatz (20, 30) durch diesen hohlen Körper (10) geführt ist, so daß dessen Loch-Herstellungs-Spitze (21, 31) nach vorne aus dem hohlen Körper (10) vorsteht, dadurch gekennzeichnet, daß der hohle Körper (10) ein weiteres Gewinde (18) aufweist, das innenliegend zwischen dem selbstschneidenden Außengewinde (12) vorgesehen und geeignet ist, um eine Drehung des Verankerungselements zu verhindern, wenn es in das spröde Material eingesetzt ist.

2. Verankerungselement nach Anspruch 1, dadurch gekennzeichnet, daß die Einrichtungen zum Befestigen des Verankerungselements am Bohrereinsatz (20) spiralförmige Einschnitte (16) beinhalten, die in der Innenwand des hohlen Körpers (10) ausgebildet und geeignet sind, um mit den spiralförmigen Einschnitten (22, 23) von einem Spiralbohrereinsatz (20) zusammenzuwirken.

3. Verankerungselement nach Anspruch 1, dadurch gekennzeichnet, daß die Einrichtungen zum Befestigen des Verankerungselements an einem Bohrereinsatz (30) geradlinige Einschnitte (16') beinhalten, die in der Innenwand des hohlen Körpers (10) ausgebildet sind und ein kreuzförmiges Profil definieren, das zum Zusammenwirken mit einem Bohr- und Schraubendreher-Endstück (30) geeignet ist, das ein komplementäres kreuzförmiges Profil hat.

4. Verankerungselement nach einem der vorhergehenden Ansprüche, dadurch gekennzeichnet, daß der hohle Körper (10) an einem Ende einen Satz von Zähnen (17, 17') aufweist, um ein Befestigungsmittel zu halten, das in den hohlen Körper (10) eingreift und nach vorne aus dem hohlen Körper (10) vorsteht.

5. Verankerungselement nach einem der vorhergehenden Ansprüche, dadurch gekennzeichnet, daß der längliche hohle Körper (10) einen Einlaßbereich (19) hat, der in der Nähe von einem Ende (13) angeordnet ist und es ermöglicht, daß ein Befestigungsmittel in dem hohlen Körper (10) zentriert wird.

6. Verankerungselement nach einem der vorhergehenden Ansprüche, dadurch gekennzeichnet, daß das selbstschneidende Gewinde (12) in der Nähe von einem Ende des länglichen hohlen Körpers (10) Spalte (12a) hat, wobei die Spalte Oberflächen haben, die in radialer Richtung im wesentlichen flach sind, für den Zweck, einen Schneidvorgang durchzuführen.

## Revendications

1. Organe d'ancrage comportant un corps creux (10) substantiellement sous forme d'un corps de révolution allongé qui est ouvert aux deux extrémités et présente un filetage extérieur auto-taraudeur (12) apte à l'ancrer dans un matériau friable, ledit corps creux (10) présentant des moyens (16, 16') pour le fixer à un foret (20, 30) qui présente des rainures longitudinales (22, 23, 36, 37) dont les côtés constituent des bords de coupe (22a, 23a, 32a, 32b, 33a, 33b) distribués autour de la circonférence du trou à faire, ledit foret (20, 30) traversant ce corps creux (10) de façon que sa pointe (21, 31), qui fait le trou, dépasse en avant dudit corps creux (10), caractérisé par le fait que ledit corps creux (10) présente un filetage supplémentaire (18) interposé à l'intérieur du filetage extérieur auto-taraudeur (12) et convenant pour empêcher la rotation de l'organe d'ancrage lorsqu'on l'insère dans le matériau friable.

2. Organe d'ancrage selon la revendication 1, caractérisé par le fait que lesdits moyens pour fixer l'organe d'ancrage au foret (20) comportent des rainures hélicoïdales (16) formées par la paroi intérieure dudit corps creux (10) et aptes à coopérer avec les rainures hélicoïdales (22, 23) d'un foret hélicoïdal (20).

3. Organe d'ancrage selon la revendication 1, caractérisé par le fait que lesdits moyens pour fixer l'organe d'ancrage à un foret (30) comportent des rainures rectilignes (16') formées dans la paroi intérieure dudit corps creux (10) et définissant un profil cruciforme apte à coopérer avec un embout de perçage et de vissage (30) de profil cruciforme complémentaire.

4. Organe d'ancrage selon l'une quelconque des revendications précédentes, caractérisé par le fait que ledit corps creux (10) présente à une extrémité un groupe de dents (17, 17') pour fixer un moyen d'assemblage engagé dans ledit corps creux (10) et dépassant en avant hors dudit corps creux (10).

5. Organe d'ancrage selon l'une quelconque des revendications précédentes, caractérisé par le fait que ledit corps creux allongé (10) présente une portion d'entrée (19) située près d'une extrémité (13) et permettant à un moyen d'assemblage d'être centré à l'intérieur dudit corps creux (10).

6. Organe d'ancrage selon l'une quelconque des revendications précédentes, caractérisé par le fait que ledit filetage auto-taraudeur (12) présente des fentes (12a) près d'une extrémité du corps creux allongé (10), les fentes présentant des surfaces de forme radialement plate aux fins de procéder à une opération de coupe.
